# EUROPEAN PATENT APPLICATION

(11) **EP 1 788 727 A1**
(43) Date of publication of application: **23.05.2007**
(21) Application number: 05714851.2
(22) Date of filing: 17.03.2005
(51) Int. Cl.: H04B 10/08

(54) **METHOD TO PROTECT HUMAN EYES IN OPTICAL COMMUNICATION SYSTEM**

(30) Priority: 17.08.2004 CN 200410051118
(71) Applicant: ZTE Corporation, Guangdong 518057 (CN)
(72) Inventor: XIA, Yan, Nanshan Dist.Shenzhen, Guangdong 518-057 (CN)
(74) Representative: Hayden, Nicholas Mark
(86) International application number: PCT/CN2005/000326
(87) International publication number: WO 2006/017962

(57) **Abstract**

The present invention relates to a method for protecting human eyes in optical communication system. This method is applied in the channel layer of the optical communication system, and includes protection process and restoration process, wherein the protection process detects the connected multiplexing segment of optic fiber in the terminal nodes and switches off or reduces optical transmission power at this multiplexing segment to protect human eyes after the fault is detected; said restoration process detects the state of the optic fiber manually or automatically and restores the normal working state of the system after the line is repaired. The method of the invention controls all the channel power devices in the affected multiplexing segment through channel layer, and provides the required human eyes protection function without using other devices such as electric-controlled optical attenuator (EVOA), it can reduce the complexity and the cost of the system remarkably. In the mean time, the restoration process detects the state of the line with the method of transmitting power in channel layer and utilizes message structure of pulse train, and thus avoids the problem of over strong power level resulting from that all the channels are switched on or off together.

## Description

### Technical Field

The invention relates to a method for protecting human eyes in optical communication system, especially relates to a method for protecting human eyes in coarse wavelength division multiplexing system or other systems without power control devices in multiplexing layer.

### Background Art

CWDM, i.e. Coarse Wavelength Division Multiplexing System, uses optical multiplexer to combine wavelengths transmitted in different optic fibers into being transmitted in one optic fiber. Then, at the receiving end of a link, CWDM uses de-multiplexer to decompose the wavelengths and transmit the decomposed wavelengths to different optic fibers to access to different receivers. The channel interval of CWDM is 20nm, and the channel interval of DWDM is from 0.2nm to 1.2nm. Therefore, relative to DWDM, CWDM is called as Coarse Wavelength Division Multiplexing technique.

According to optical power grades, the laser device or optical communication system is divided into Classes 1-4. Class1 is a relative safe grade in predictable surroundings while Class4 is the most dangerous grade; Hazard level indicates a danger grade that people are possibly exposed to optical radiation due to accidents or other abnormal conditions in the optical transmission system. The standard IEC60825, according to the optical power grades of devices, is divided into Hazard levels 1-4 correspondingly.

In Wavelength Division Multiplexing (WDM) system, in order to extend the transmission distance, optical transmitters and optical amplifiers with big output power need to be used, which may possibly arrive Class 3B or even more dangerous safety grade, causing possible hurt to maintenance staffs. Therefore, from the aspect of multiplexing layer, WDM system is considered to be a system that should perform human eyes protection.

When in normal working state, since the optical radiation is shielded completely, the device can be considered of Class1 grade. However, latent dangers exist in optic fiber communication system itself, e.g. in such abnormal conditions as optic fiber rupture, the optical signals being transmitted will hurt the maintenance staff or the other people who contact the rupture places. Therefore, the system output interface optical power should be conducted Hazard level evaluation based on the IEC 60825 standard, and implement human eyes protection process according to the normal system optical power and the speed of automatic power attenuation, so as to reduce the optical power to lower dangerous levels when necessary; among the human eye protection protocols, the established standards include ITU-T G.664.

In IEC 60825 standard, there are altogether three areas possibly involved, i.e. controlled, limited, and unlimited areas. For the unlimited area, the device with power above Hazard level 2 must use the human eye protection process to reduce the power to Class 1; For the limited area, the device with power above Hazard level k x 3A must use the human eye protection process to reduce the power to be less than Class 3A; For the controlled area, the device with power above Hazard level 3B must use the human eye protection process to reduce the power to be less than Class k × 3A.

In standard ITU-T G.664, for systems with limited area danger grade above Hazard level 3A and systems with controlled area danger grade above Hazard level 3B, the human eye protection process needs to be provided. But in consideration of safety demand, systems with danger grade above Hazard level 1 are also required to provide the human eye protection process so as to further reduce the system's danger grade.

In exiting technique, in order to protect human eyes, the standard ITU-T G.664 demands the DWDM system to provide human eye protection process under such accidents as optic cables are cut off, devices are invalid, or optical connecters are pulled out etc, to shutdown all the amplifiers or power transmitting instruments in the affected transporting segments or multiplexing segments, or reduce the output power into the range of safe power (Class 1); when the signal restores, the system is restored to work normally manually or automatically.

According to different granularities transported, the WDM system can be divided into two layers: a multiplexing layer, for transmitting combined wave optical signals (i.e. group channel multiplexing signals including multiple channel wavelengths); a channel layer, for transmitting single channel wavelength signals. The currently exiting human eye protection scheme is mainly used in dense wavelength division multiplexing (DWDM) system with amplifiers. It controls the devices such as optical amplifiers in the system multiplexing layer. Through controlling the size or existence of the output power of amplifiers, the function of human eye protection is realized.

By using low-priced coaxial encapsulation DFB laser without refrigeration and low-priced multiplexer/demultiplexer, the CWDM system has a low cost. It is mainly applied in Metropolitan Area Network (MAN) for implementing transparent transmission of SDH signal and Ethernet signal with various speeds and various services. The maximum power of the combined channel signal of CWDM system multiplexing layer can reach to 12dBm or even higher, therefore it also demands the function of human eyes protection.

The range of the commonly used wavelength in CWDM system is 1470~1610nm, which is so wide that it can hardly find optical amplifiers being able to cover it. Even if the amplifier is used, only part of the frequency segments can be amplified. Since CWDM has no optical power control device on the multiplexing layer, the scheme of DWDM system controlling the amplifier in prior art is also difficult to implement. Therefore, other ways must to be found to control the implementation of human eye protection.

In CWDM system, since it lacks the multiplexing layer power controller, even if amplifiers are used, only part of the wavelength segments can be covered. Thus, the function of human eyes protection can not be realized with the control method of the amplifier in current technique. While in DWDM system, there are some systems not necessary to be configured with amplifiers because of close distance, in such case, if amplifiers are configured to protect human eyes, the cost and complexity of the system will inevitably increase, and the reliability of the system will also decrease.

Therefore, the existing technique still needs to be improved and developed.

### Summary of the Invention

The technical problem to be solved in this invention is providing a method for protecting human eyes in optical communication system, thereby providing protection for people exposed to strong light in CWDM system or DWDM system without setting amplifiers in multiplexing layer.

In order to solve the above technical problem, this invention provides the following technical scheme:
A method for protecting human eyes in optical communication system, which is applied to channel layer of the optical communication system, and includes protection process and restoration process, wherein in the protection process, the connected optic fiber multiplexing segment can be detected at the terminal node, said multiplexing segment is shutdown or the optical transmission power is reduced after the fault is detected so as to protect human eyes; said restoration process can detect the optic fiber status manually or automatically, and restore the normal operating state of the system after the line is detected to be repaired.
Said method, wherein the protection process includes the following steps of:
   a) signal transmitting unit corresponding to each channel between the terminal nodes of the two ends transmitting optical signals to opposite terminal node of the opposite end through bi-directional optic fibers; the signal receiving unit of the opposite end detecting the state of the receiving optical power continuously;
   b) the signal receiving unit corresponding to each channel of the two ends detecting that the receiving optical power is in a state of interruption when transmission in line optical fiber ruptures or the line signal is interrupted due to some reasons, sending the fault information to the corresponding control unit;
   c) said each control unit shutting down or reducing the output power of the signal transmitting unit transmitting reversely of this channel of this end;
   d) after the control units of all the channels of both ends shutting down and reducing the output power of all the signal transmitting units of both ends, ensuring the radiation power in the broken-down optical fiber within a safe limit.
Said method, wherein said restoration process may adopt separate parallel mode, comprising the following steps of:
   e1) the signal transmitting unit corresponding to each channel of the terminal nodes of the two ends transmitting re-start request message to the opposite end through the multiplexing segment line optic fiber circularly with predetermined time interval;
   f1) after the signal receiving unit of each corresponding channel of the opposite end receiving the request message from the sending end, sending restoration information to the control unit of this channel of this end;
   g1) said control unit verifying whether the message is correct, if it is correct, controlling the signal transmitting unit of this channel of this end to send response message to the corresponding channel of the opposite end;
   h1) if the signal receiving unit of each corresponding channel of the opposite end receives the response message, notifying the corresponding control unit of this channel of this end to control the signal transmitting unit and signal receiving unit of this channel of this end to restore the normal working state based on the human eyes protection algorithm;
   i1) if the signal receiving unit of each channel of the end having sent the response message detects that the receiving power is restored normal state and the receiving power does not intermit during the time of verifying delay, notifying the control unit of this channel of this end to control the signal transmitting unit and signal receiving unit of this channel of this end to restore the normal working state based on the human eyes protection algorithm.
Said method, wherein said restoration process may use the master-slave mode, first choosing a random pair of interconnected channels in each channel of the terminal nodes to be master channels, and the other channels to be slave channels, and further including the following steps of
   e2) the signal transmitting units corresponding to the master channels of the terminal nodes of the two ends sending the re-start request message to the opposite end through the line optical fiber with the predetermined time interval;
   f2) after the signal receiving unit of the master channel of the opposite end receiving the request message, sending the restoration information to the control unit of this channel of this end;
   g2) the control unit verifying whether the message is correct, if it is correct, controlling the signal transmitting unit of this channel of this end to send the response message to the opposite end;
   h2) if the signal receiving unit of the master channel of the opposite end receives the response message, notifying the corresponding control unit to control the transmitting and receiving units of the master channel of this end to restore the normal operation state;
   i2) if the signal receiving unit of the master channel of the end having sent the response message detects that the receiving power is restored normal state and the receiving power does not intermit during the time of verifying delay, notifying the corresponding control unit to control the signal transmitting unit and signal receiving unit of the master channel of this end to restore the normal operation state;
   j2) the control units of the master channels of the two ends sending commands to the control unit of each slave channel of this end through inner module bus respectively to control the signal transmitting unit and signal receiving unit of corresponding channel to restore the normal operation states.
Said method, wherein said request message and said response message transmitted between the terminal nodes of the two ends can be power level or tailored pulse train.
Said method, wherein the operation of said signal transmitting unit, signal receiving unit, and control unit is realized by the aid of node layer protocol algorithm.
Said method, wherein the generation of said response message may be controlled by the re-start request message, outputting high level when optical power high level is received, outputting low level when optical power low level is received.
Said method, wherein said protection process and said restoration process can also be directed by the operator, whose commands are assigned to the corresponding terminal nodes for implementation through network management bus and network management unit.
Said method, wherein said optical communication system can be coarse wavelength division multiplexing system, dense wavelength division multiplexing system without multiplexing layer optical power controller, or SDH system.

The method for protecting human eyes in optical communication system provided by this invention can perform control automatically according to the state of the system line, when in such accidents as the optical cable is cutoff, the device is invalid, or the optical connecter is pulled out, it controls all the channel power devices in the affected multiplexing segment in consideration of human eyes' safety, so as to provide the required function of human eyes protection; when the signal is restored, restoring the channel power devices to the normal operation manually or automatically. Particularly, since the method of this invention realizes human eyes protection by the control of the channel layer, the system implements the optical power control scheme in the channel layer instead of using the optical power control device in the multiplexing layer. Therefore, in the CWDM or DWDM system without multiplexing layer optical control device, the function of providing human eyes protection can be achieved safely and reliably, and the implementing method satisfies the time and power demands of international standard G.664, and accords with the operation and maintenance demands of on-line devices.

Comparing with the prior art, the method of this invention has or can be further equipped with the following advantages:
· By the power control device (signal transferring unit 303) in the channel layer, this invention solves the problem of human eyes protection in CWDM system or other systems that have no power control device in the multiplexing layer, and it does not need to use such devices as electric-controlled optical attenuator EVOA, thereby greatly reducing the complexity and cost of the system.
· By the node layer protocol algorithm, this invention realizes the control, its detection measure is after-interrupting-point detection instead of before-interrupting-point reflecting detection, and has the ability of remote fault processing.
· The realization of the function of this invention does not need to use the system supervision channel OSC, the message transmission between nodes also does not need to use the system supervision channel, thereby having a better adaptability.
· The protocol message (Request and Response) between nodes in this invention can consist of pulse trains, which effectively interdict interference from outside while not needing to contain overfull information and additional special modulation and special information, therefore, it is simple and easy.
· In the method of this invention, the line state detection of the restoration process adopts the method of channel layer power transmitting, meanwhile, it can also adopt the message structure of pulse trains, avoiding the problem of over-strong power level due to the reason that all the channels are switched on / off together.

The scheme employed in this invention may adopt the master-slave or separate parallel control mode, achieving the same effect of human eyes protection according to actual conditions of different systems.

### Brief Description of the Drawings

Figures 1A and 1B are schematic views of structure of the CWDM system or the DWDM system without optical amplifier according to this invention;
Figure 2 is a schematic view of the pulse time-sequence of the Request and Response messages in the protocol according to the embodiments of this invention;
Figure 3 is a schematic view of time-sequence of the Protect, Request message transmitting and restoring in the protocol implementation according to the embodiments of this invention;
Figure 4 is a time-sequence view of message transmitting and responding between the two terminal nodes in the protocol implementation according to the embodiments of this invention;
Figure 5 is a schematic view of the structure of the optical signal transferring unit according to the embodiments of this invention;
Figure 6 is a flowchart of the human eyes protection protocol according to the embodiments of this invention.

### Preferred Embodiments of the Invention

The following text will describe in details the implementing schemes of each component part of this invention, the optical and electrical connection relationship between each component part, the control method, the software working manner, and the communication function of said device of this invention by the control command of the device interface.

This invention realizes human eyes protection in optical communication system, in CWDM system and other systems where the master optical channel has no such optical power control devices as optical fiber amplifier, and the optical power is above the safe grade that the human eyes can contact, this invention realizes the function of human eyes protection aiming at the possible faults of fiber rupture etc. by implementing control in the channel layer; and after the faults are restored, this invention is able to restore the system to the normal power state by manual or automatic controlled restoration operation. The devices of the CWDM channel layer possess the control function of switching on and switching off, realizing the function of human eyes protection by the optical transferring device of the channel layer.

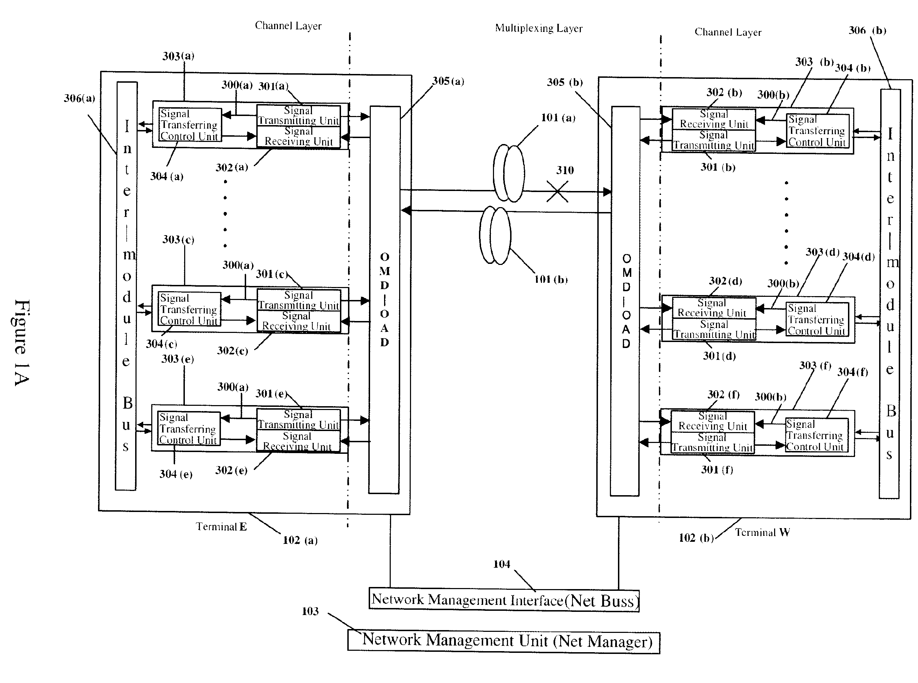

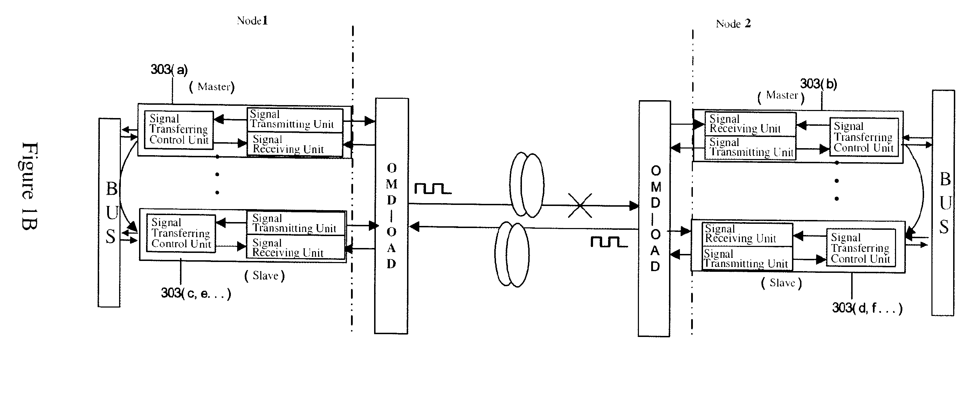

Figure 1A is the schematic view of the structure of CWDM system employed in this invention or DWDM system without the optical amplifier.

In the optical communication system without the optical relay (optical amplifier), such as DWDM system, a multiplexing segment consists of two add/drop multiplexing nodes or two terminal nodes. As shown in figure 1A, the system comprises two terminal nodes 102(a), 102(b), and the bi-directional line optic fibers (or other transmission medias) 101(a), 102(b) between the two terminal nodes.

Said terminal node 102(a) consists of signal transferring control units 303(a,c,e ...), Inter-module bus 306(a) between the units, and optical Multiplexer/Demultiplexer or optical add/drop multiplexer unit OMD-OAD 305(a). Said signal transferring control units 303(a,c,e...) include signal transmitting units Transimitter 301(a,c,e ...), signal receiving units Receiver 302(a,c,e...) and control units Control Module 304(a,c,e...), wherein said signal transmitting units 301(a,c,e...) possess the ability of controlling output power; said signal receiving units 302(a,c,e ...)possess the ability of supervising input power continuously; said control units 304(a,c,e...) possess the ability of implementing human eyes protection according to the set human eyes protection control algorithm. Bus 300(a) is the communication bus between the control units 304(a,c,e...) of the internal signal transferring control units 303(a,c,e...), the signal transmitting units 301(a,c,e...) and signal receiving units 302(a,c,e...).

Between said signal transferring control units 303(a,c,e...), the information is transmitted by the Inter-Module Bus 306(a), which can adopt various topology structures such as the structure of star. If the separate parallel mode is used, the bus can also not be necessary.

Said terminal node 102 (b) consists of units 301~305(b,d,f...) which perform the same functions as said terminal node 102(a), and also possess the same structure.

When in application, in the system described above, the optical signal of said terminal node 102(a) is sent by the signal transmitting units 301(a,c,e...) of this node, combined by the optical Multiplexer/Demultiplexer or optical Add/Drop multiplexer unit 305(a), transmitted by the line optic fiber 101(a) to the terminal node 102(b), and received by the signal receiving units 302(b,d,f...) after split by the optical Multiplexer/Demultiplexer or optical Add/Drop multiplexer unit OMD-OAD 305(b). The reverse signal is sent by the signal transmitting units 301(b,d,f...) of the terminal node 102(b), combined by the optical Multiplexer/Demultiplexer or optical Add/Drop multiplexer unit OMD-OAD 305(b), transmitted by the reverse line optic fiber 101(b) to the terminal node 102(a), split by the optical Multiplexer/Demultiplexer or optical Add/Drop multiplexer unit OMD-OAD 305(b) of this node, and received by corresponding signal receiving units 302(a,c,e ...) respectively. The network management unit Net Manager 103 and the network management interface Net Bus 104 are used to manage the above optical communication system.

There can be optical supervisor channel (OSC) between said terminal node 102(a) and terminal node 102(b), for transmitting information between the nodes.

As illustrated in the optical communication system in figure 1A, there is no power controller set in the multiplexing layer, thus the prior art can not be used in the multiplexing layer to realize the function of human eyes protection.

In the method for protecting human eyes in optical communication system of this invention, the control process of human eyes protection includes protection process and restoration process, wherein the protection process is used to detect fault when the optic fiber is broken, and shutdown the transmitting optical power in the multiplexing segment the fault involves to protect human eyes; the restoration process is for detecting the status of the optic fiber automatically or manually, and restoring the system to normal operation state after the line is repaired.

A preferred embodiment for the realization scheme of the human eyes protection process in the channel layer of said CWDM system according to the method of this invention is as follows:
Step 1, when in normal operation, the data is transmitted between the two nodes through the bi-directional optic fiber. The signal transmitting unit 301 transmits the optical signal through the bi-directional optic fiber to the opposite node; said signal receiving unit 302 of the opposite node detects the status of the receiving optical power continuously, after processing, the information of the detection result can be transmitted to other terminal nodes;
Step 2, assuming that the transmission in the line optic fiber 101(a) is ruptured for some reason or the line signal is interrupted for other reasons at position point 310, the signal receiving unit 302(b) of the receiving end will be in a state of receiving power interrupting, after the interrupting state is verified to be stable, the fault of the optic fiber is approved, said signal receiving unit 302(b) transmits the fault information to the control unit 304(b) of this node along bus 300(b);
Step 3, the control unit 304(b) switches off or reduces the output power of the transmitting unit 301(b) transmitting reversely through the bus 300(b) according to the human eyes protection algorithm. Since CWDM system is a multiple wavelength system, when the line optic fiber 101(a) breaks down, all the signal receiving units 302(b,d,f...) of the terminal node 102(b) will be in a failed receiving power state, thus the output power of all the signal transmitting units 301(b,d,f...) will be switched off or reduced, in order that the radiation power of the line optic fiber at point 310 is kept in the safe range. Said signal transmitting unit 301 of the terminal node directly switches off or reduces the output power, instead of reducing the output power by employing power control devices such as EVOA, thus the cost of the system can be reduced evidently.
Step 4, With the shutdown or reduce of the power of the signal transmitting unit of said terminal node 102(b), the signal receiving units 302(a,c,e...)of said terminal node 102(a) will detect the fault of the receiving optical power simultaneously no matter whether said line optic fiber 101(b) is sound or not, thus the control units 304(a,c,e...) of the terminal node will also control all the transmitting units 301(a,c,e...) of the control node 102(a) to switch off or reduce the output, by which, the radiation power in the failed optic fiber 101(b) will be kept in the safe range, and the radiation power accessible by human eyes at the fault point 310 will be kept in the safe range;

Thus, the whole protection process is realized with the theme of respective protection in the channel layer, and the bi-directional transmission power of the optic fiber reaches the requirements for protecting human eyes, meanwhile, since the operation on Inter-Module Bus is not involved, the complexity in implementation can be reduced.

As above, the protection process finishes, and the restoration process begins.

In the optical communication system with amplifier, the restoration process detects the state of the line by the method of the amplifier outputting detection level. If the opposite end responds to the detection level, the optic fiber is assumed to be finished repair, and then the system is restored normal state.

The method of this invention can also realize the system restoration by the theme of power level. But, the message transmission between nodes used in the system of this embodiment is not simply the power level, instead it is custom-made pulse train for preventing misoperations due to interference from outside. The above scheme has the following two advantages: First, the pulse train has an inherent pulse width, carries certain information, and can prevent interference from outside. When the line fails, the optical communication system usually uses the devices such as OTDR to detect the optical line, while by using the pulse train message format, the system is able to intelligently distinguish the system re-start message from the OTDR detection signal, thereby reducing the fault restoration as well as the risk of damage to the maintenance man due to accidental restoration; Second, the IEC 60825 standard prescribes that the transmitting power level relates to the level transmitting time, while by using the pulse train, the limitation on the pulse power level can be relaxed, the control on the signal transmitting unit 301 by the system can be simplified, and the cost for function realization can be reduced.

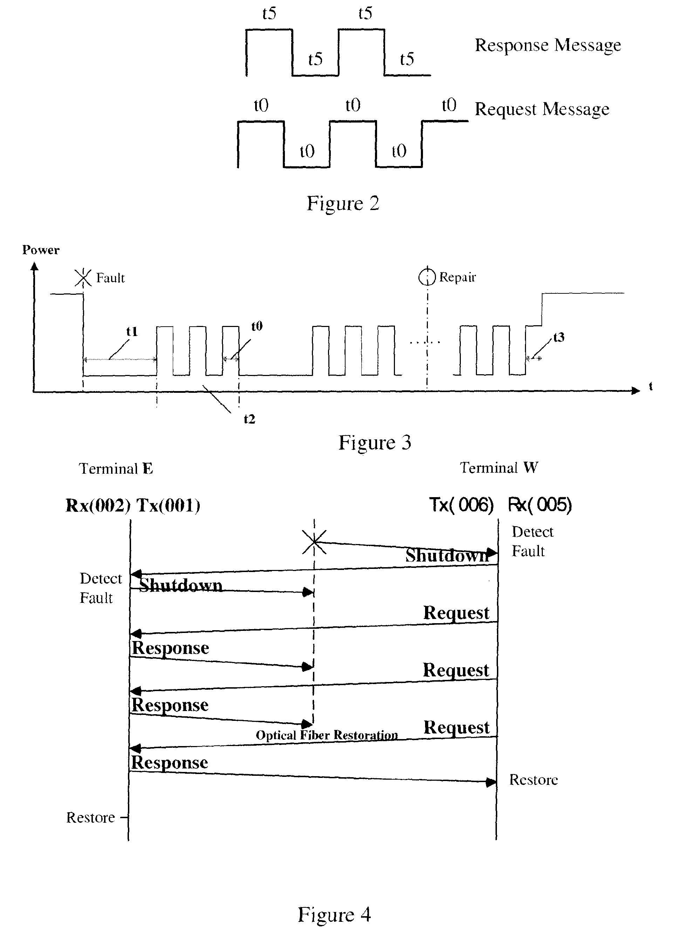

Figure 2 shows the schematic view of the Request pulse train being the detection message and the Response pulse train being the response message as adopted in the theme of this embodiment. The Request message and Response message include multiple pulses respectively, the pulse width can ensure identification by the signal receiving unit 302, and also ensure the reduction of the high level time of the optical power to the largest extent, so as to keep the overall radiation power of the Request message in the safe limit.

The control for the Response message is similar to that of Request message. The simplest generation of the Response message is controlled by the Request message. When the signal receiving unit 302 receives high level of the optical power, the control unit 304 notifies the signal transmitting unit 301 of this channel to output high level; and when low level of the optical power is received, low level will be output. More complex control methods can also be used.

In CWDM system or other systems without optical amplifier, since the optical amplifier can not cover all transmitting wavebands or there is no optical amplifier, the method of this invention implements control in the channel layer; in the scheme of optical channel layer used in the method of the invention, the restoration process includes the following two specific embodiments:

### First, Separate parallel mode

This mode adopts separate processing in each channel (i.e. identifiable different wavelengths), that is, each channel sends re-start Request message separately, receives the Response message, and detects the state of the line. This mode has simple protocol, no protocol message transmission is needed between channels, i.e. between each channel in the terminal nodes. However, since all the signal transmitting units need to switch on and off the laser frequently during the restoration process, the life of the system may be affected to some extent.

The following steps of the restoration process follow up the above protection process:
Step 5, the signal transmitting units 301(a,c,e...), 301(b,d,f...) corresponding to each channel of the terminal nodes of the two ends sending the re-start Request message to the opposite end through the line optic fiber with standard time interval by aid of the power level or pulse train, till the re-start message or Response message is received from the opposite end, as shown in figures 2 and 3;
Step 6, after the signal receiving unit 302 of each corresponding channel of the opposite end receives the Request message, sending restoration information (RES) to the control unit 304 of this channel of this end through bus 300;

It is either possible that both the two terminal nodes of one channel send the re-start Request message, or one end does not send, because as long as one end receives the re-start Request message sent by the opposite end, the state will be transferred and the Response message transmission will be started.
Step 7, the control unit 304 verifying whether the message is correct, if it is correct, controlling the signal transmitting unit 301 transmitting reversely of this channel of this end to send the Response message to the opposite end through bus 300 according to the human eyes protection algorithm;

In fact, it is not always that the first Request message can get a satisfied reply, it is because the state of single fiber or two-fiber broken may retain for a long time before the optic fiber is repaired, such as several hours or even longer, only when the optic fiber is repaired can the opposite end receive stable Request message, only by then, the restoration process is valid.
Step 8, if the signal receiving unit of each corresponding channel of the opposite end receives the Response message, it means that the Request-Response ring responds correctly, notifying the control unit 304 of this channel of this end to control the signal transmitting unit and signal receiving unit etc. of this channel of this end to restore normal operation state through bus 300 according to the human eyes protection algorithm;
Step 9, if the signal receiving unit 302 of each channel of the end having sent the Response message detects that the receiving power is restored to normal and the receiving power does not intermit during the period of delay verification, it is assumed that the optical cable is restored, notifying the control unit 304 of this channel of this end to control the signal transmitting unit and signal receiving unit etc. of this channel of this end to restore normal operation state through bus 300 according to the human eyes protection algorithm.

### Second, Master-slave mode

This mode adopts the method of the master channel sending the re-start message and receiving the Response message, after the system line is judged to have been repaired, the master channels control the salve channels (other channels) to restore completely through Inter-Module Bus. Although the realization of the master-slave mode is complex and the protocol needs to be transmitted between each channel in the terminal node, the restoration process only needs to switch on and off the master channel to send messages, and the controlled state is maintained in the channels, which helps to extend the life of the system. Referring to figure 1B, the master channel corresponds to the signal transferring units 303(a) and 303(b), and the other signal transferring units (there is only one indicated in the figure) correspond to the slave channels. In fact, any channel may be designated by the network management to be the master channel for human eyes protection restoration.

The following steps of the restoration process follows up the above protection process:
Step 5, the signal transmitting unit 301 corresponding to the master channels of the two ends sending the Request message to the opposite end through line optic fiber 101 with standard time interval by aid of the power level or pulse.
Step 6, the signal receiving unit 302 of the master channel of the opposite end sending the restoration information (RES) to the control unit 304 of the master channel of this end through bus 300 after receiving the Request message;

Similar to the separate parallel mode, after one end receives the re-start Request message from the opposite end, the state will be transferred immediately and the transmission of the Response message will be started. Therefore, in practice, it is possible that only the signal transmitting unit 301(a) or 301(a) sends the Request message, or both the signal transmitting unit 301(a) and 301(a) send the Request message.
Step 7, this control unit 304 verifying whether the message is correct, and controlling the signal transmitting unit 301 transmitting reversely of the master channel of this end to send the Response message to the opposite end through bus 300 according to the human eyes protection algorithm;

In fact, it is not always that the first Request message can get a satisfied reply, because the state of single fiber or two-fiber broken may retain for a long time before the optic fiber is repaired, such as several hours or even longer, only when the optic fiber is repaired can the opposite end receive stable Request message, and only by then the restoration process is valid.
Step 8, if the signal receiving unit 302 of the master channel of the opposite end receives the Response message, it indicates that the Request-Response message ring responds correctly, then notifying the control unit 304 of the master channel of this end to control the transmitting unit and receiving unit of the master channel of this end to restore normal operation state through bus 300 according to the human eyes protection algorithm;
Step 9, if the signal receiving unit 302 of the master channel of the end having sent the Response message detects that the receiving power is restored to normal and the receiving power does not intermit during the period of delay verification, it is assumed that the optical cable is restored, then notifying the control unit 304 of the master channel of this end to control the signal transmitting unit and signal receiving unit of the master channel of this end to restore normal operation state through bus 300 according to the human eyes protection algorithm;

The above step is almost same with that of the separate parallel mode, the difference only lies in that the above step is carried out only in the master channel, when it comes to step 9, both the master channels of the two terminal nodes restore normal state.
Step 10, the control units 303 of the master channels of the two terminal nodes sending commands to the other control units of the slave channels through the Inter-Module Bus 306 of this terminal node respectively, the other control units controlling the signal transmitting unit and the signal receiving unit of this channel to restore normal operation state through bus 300, and thus finishing the restoration process.

As above, the whole restoration process is completed.

The operators can assign commands through the network management unit 103 and the network management bus 104 to each terminal node for the implementation of said human eyes protection function, the start-up of the protection process and restoration process according to the method of the invention, thereby realizing the manual control.

In the human eyes protection process of the method of the invention, the participation of the supervising channel OSC is unnecessary, which avoids possible influence to the system caused by the OSC fault, and reduces the fault rate, and also ensures the application of the human eyes protection function in the system without supervision channel.

Figures 3 and 4 are schematic views of the time sequence of the protection process and restoration process, and the time sequence of request and response between the two terminal nodes in the protocol processing according to the method of this invention. As shown in figure 3, the abscissa refers to time, the ordinate refers to optical power level, the wave-form represents that the signal transmitting unit 301 keeps the status of low power level (or shutdown) and sends the Request message, the Request message is required to ensure the optical radiation power possibly produced within the safe limit (Please refers to Standard 60825 for the details of the method and time of detection). The Request message is transmitted repeatedly with a predetermined time interval, till the restoration process is started; the time sequence of the Response message is not indicated in the figures.

In the figures, t0 refers to the pulse width of the Request message, t5 refers to the pulse width of the Response message (see figure 2); t1 refers to the time for the signal transmitting unit keeping the state of low power level in order to reduce the possibility of the maintenance man and other persons exposing under the optical pulse; t2 refers to the integral message width of the Request message, it is required to carry enough information for the receiving unit to identify the possible interfere pulse from outside; t3 refers to the verification time before restoration, whose length is different when under different states, it is required to ensure that no operation of wrong restoration occurs, the specific time constant has to satisfy standard G.664.

After the fault occurrs and before the system restores, it is possible that the bi-directional signal transmitting units transmit the Request message several times to detect whether the state of the line optic fiber is restored normal state, and wait for the Response message from the opposite end. Generally, if the line fault is bi-directional, the line optic fibers of both directions transmit the Request message, till both are repaired; if the line fault is of one direction, for one channel, the optic fiber of one direction in the bi-directional line optic fibers transmits the Request message, and the optic fiber of the other direction transmits the Response message. Figure 4 illustrates the restoration process when a single fiber is ruptured in the bi-directional optical transmission system, in which there are multiple request-response processes, but they don't form rings and therefore they can not be restored before the ruptured optic fiber is repaired.

Both the protection process and restoration process in said method of human eyes protection stated above are implemented automatically. The above method does not exclude carrying attempts of restoration many times until the optic fiber is repaired and the system is restored. Meanwhile, the manual control by the network management control layer can also be implemented, that is, transmitting the Request message manually, and starting the restoration process manually.

This invention is applicable for CWDM system without optic power control device in multiplexing layer, and also is applicable for special cases (short distance without optical power controller in multiplexing layer) in DWDM system application, and human eyes protection function in single wavelength application systems, such as SDH.

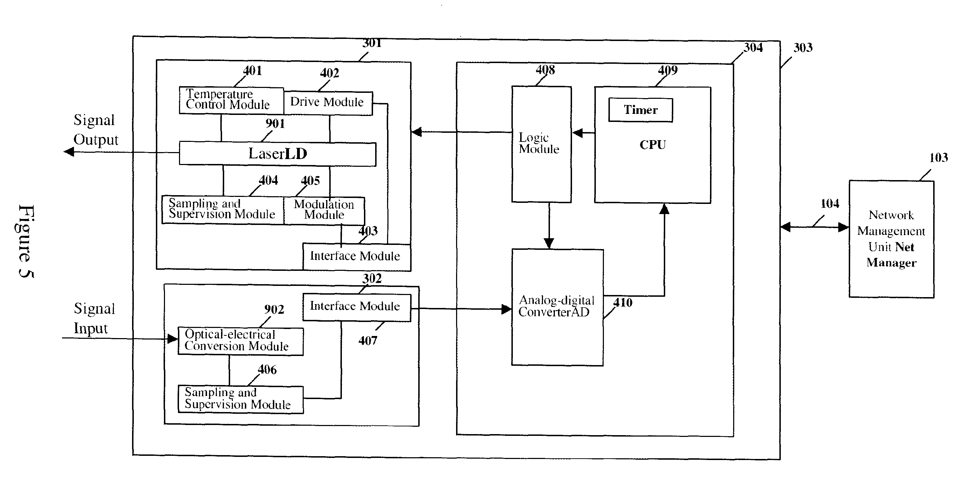

Figure 5 illustrates the specific structure of the signal transferring control unit 303 according to the method of this invention, including:

### (1) Hardware Components

The signal transferring control unit includes a control unit 304, a signal receiving unit 302 and a signal transmitting unit 301.

Said signal transmitting unit 301 consists of a laser LD 901, a sampling and supervising module SAMPLE 404, a temperature control module 401, a drive module 402, a modulation module 405 and an interface module 403.

Said signal receiving unit 302 consists of an optical-electrical converter PD/APD 902, a sampling and supervision module SAMPLE 406 and an interface module 407.

Said control unit 304 consists of a logic module LOGIC 408, a processor CPU 409 and an analog-digital converter AD410.

The external bus of said optical signal transferring unit 303 is network management bus 104, through which, the network management unit 103 may control multiple optical transferring single boards.

### (2) Working data and the relationship between the data

During processing, the optical-electrical converter PD/APD 902 of said signal receiving unit 302 is used for receiving the power and transferring the power into electrical signal, the supervision module 406 should collect the state of the receiving optical power continuously and transmit to the control unit 304 through interface module 407 and bus 300;

Said control unit 304 collects the power state of said signal receiving module 302 through analog-digital converter 410, with the logic algorithm calculation of the processor 409, the commands are transmitted to the signal transmitting unit 301 through the logical module 408 and bus 300;

Said signal transmitting unit 301 receives the commands of said control unit 304 through the interface module 403, the drive module 402 controls the working state of the laser LD 901 according to the current state of the temperature control module 401, drive module 402 and modulation module 405 of related components. The operation of said signal transmitting unit 301 directly affects the signal receiving unit of the opposite end, and thus the closed-ring transmission of the data is accomplished.

Said network management unit can start and pause the human eyes protection process (protection process and restoration process) manually according to the commands of the operator.

### (3) Realizing the automatically controlled human eyes protection process

In the human eyes protection control algorithm, said signal receiving module 302 is to be the supervisor of the process, said signal transmitting module 301 is to be the executor of the process, said control module 304 is to be the controller of the process, they form integral feedback control together with the three modules of the other end, and jointly realize the function of human eyes protection according to the method of this invention.

In the realization of the function of human eyes protection according to the method of this invention, no network management is required (except for the manual start), so it has a simple logic, even if there is logical error due to hardware, it can be synchronized to correct logic in the following process.

The human eyes protection algorithm applied in the method of this invention is node-layer protocol algorithm, applying the optical power level or the pulse as the protocol message, thereby having a simple protocol structure and not needing to supervise the channel.

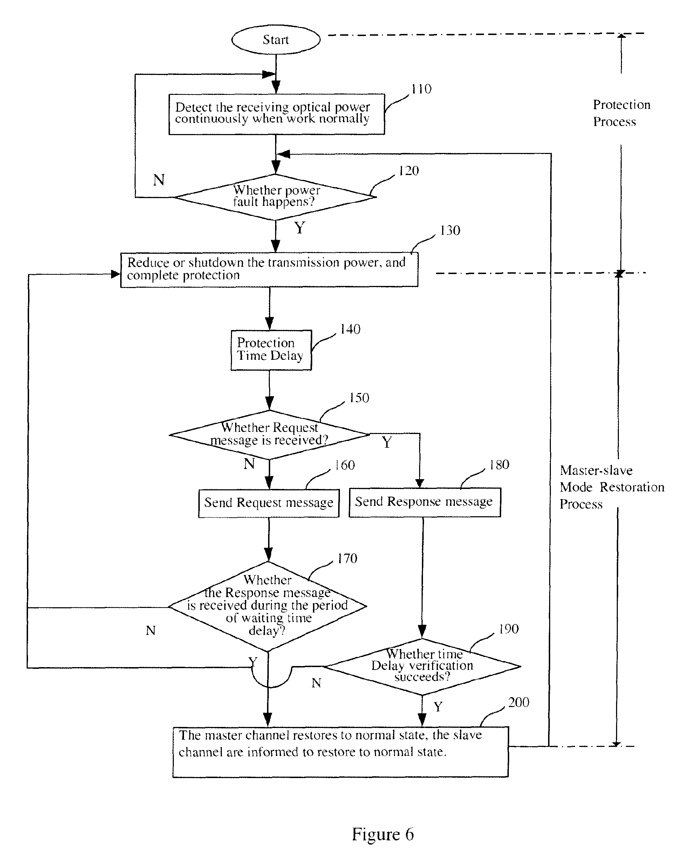

Figure 6 illustrates the process of implementing human eyes protection protocol algorithm in the signal transferring control unit corresponding to the master channel of one end under the master-slave mode, as shown in the figure, including the following steps of:
Step 110, when in normal operation, if the system allows to automatically implement the human eyes protection function, detecting the state of the receiving optical power continuously;
Step 120, if power fault is detected, performing step 130, otherwise, returning to step 110;
Step 130, reducing or switching off the transmitting power, so as to make the possible radiation power in the optic fiber achieve the safe limit, and thereby completing the protection;

The above steps are the protection process of the first stage, the second stage is the restoration process, including a manual restoration mode and an automatic restoration mode. The figure shows the process under the automatic restoration mode, including the following steps of:
Step 140, protecting the delay for a period of predetermined time to reduce the possibility that the maintenance man or other persons are exposed to the optical pulse;
Step 150, determining whether the Request message sent by the opposite end is received, if not, performing the next step, if yes, performing step 180;
Step 160, transmitting the Request message to the opposite end to detect the state of the optic fiber;
Step 170, waiting the delay for a period of predetermined time, if the Response message is received during this period, that is, the Request message and the Response message form a feedback ring, it means that the optic fiber has been restored, then performing step 200, otherwise, returning to step 130;
Step 180, transmitting the Response message to the opposite end;
Step 190, delaying for a period of time, if the receiving optical power restores and does not intermit during this period, it means that the delay verification succeeds, performing step 200, otherwise, returning to step 130; and
Step 200, controlling the master channel to restore normal state and notifying each slave channel to restore normal operation through the protocol bus, the end.

Besides the automatic restoration, this invention also supports the manual restoration mode. In the manual restoration mode, the system itself does not transmit the Request message actively to detect the optic fiber and try to restore, instead, it waits the operator to assign the command of manual restoration through the network management unit. When the command is received, the terminal node receiving the command will transmit the Request message to detect the state of the optic fiber. If the optic fiber of the system has not been repaired, there will be no reply for the Request, the manual restoration process of the system fails, and the protection state of reducing or switching off the output is restored; If the optic fiber has been repaired, the Request message and Response message will feedback successfully, and the system will restore normal state.

Additionally, the human eyes protection control of the method of this invention can further include a test restoration mode, being used as a testing measure in the early stage of system debugging. This mode may use different time constant from that of the above two modes.

For the optical communication system, there are detailed requirements upon device de-activate time, device activate time, transmission interval of the Request message, length of the Request message in the human eyes protection process and restoration process. For the details of these requirements, please refer to standard G.664 and will not be discussed further here. The method of this invention is realized by the hardware logic and processor working jointly, and the high speed hardware bus is utilized in the communication, which satisfies the demands of the standard.

The above is detailed description on the specific preferred embodiments of this invention. It should be understood that people skilled in the art are able to make more improvements and developments according to the above technical schemes of the invention, which should also be covered in the patent protection range of the invention.

### Industrial Applicability

This invention can be applied to the coarse wavelength division multiplexing system in the optical communication field or other systems without multiplexing power control devices, solving the problem of protecting human eyes in the above systems by the aid of the power control device in the channel layer.

## Claims

1. A method for protecting human eyes in optical communication system, applied in a channel layer of the optical communication system, including a protection process and a restoration process, wherein the protection process is for detecting connected optic fiber multiplexing segment in terminal nodes, and switching off or reducing transmitting optical power to protect human eyes in the multiplexing segment after detecting faults; said restoration process detects the status of optic fiber manually or automatically and restores the system to normal working state after detecting line has been repaired.

2. The method of claim 1, **characterized in that** said protection process includes the following steps of:
a) a signal transmitting unit corresponding to each channel between two terminal nodes sending optical signal through bi-directional optic fiber to the opposite terminal node; a corresponding signal receiving unit of the opposite end supervising the status of receiving optical power continuously;
b) the signal receiving unit of each channel of the two ends detecting that the receiving power is in a state of interruption when there is transmission rupture in the line optic fiber for some reasons or the line signal is interrupted for some other reasons, and sending fault information to corresponding control units respectively;
c) each of said control units switching off or reducing output power of the signal transmitting unit transmitting reversely of this channel of this end respectively;
d) after the control units of all the channels of the two ends controlling the output power of all the signal transmitting units of the two ends to be switched off or reduced, ensuring the radiation power in the broken-down optic fiber within a safe limit.

3. The method of claim 2, **characterized in that** said restoration process adopts a separate parallel mode and includes the following steps of
e1) the signal transmitting unit corresponding to each channel between the two terminal nodes sending re-start request message to the opposite end through the multiplexing segment line optic fiber circularly with a predetermined time interval;
f1) after the signal receiving unit of each corresponding channel of the opposite end receiving the request message from the sending end, it sending restoration information to the control unit of this channel of this end;
g1) said control unit verifying whether the message is correct, if it is correct, controlling the signal transmitting unit of this channel of this end to send response message to the corresponding channel of the opposite end;
h1) if the signal receiving unit of each corresponding channel of the opposite end receives the response message, notifying the corresponding control unit of this channel of this end to control the signal transmitting unit and the signal receiving unit of this channel of this end to restore normal working state according to the algorithm of human eyes protection;
i1) if the signal receiving unit of each channel of the end having sent the response message detects that the receiving power is restored normal state, and the receiving power does not intermit during the period of verifying time delay, notifying the control unit of this channel of this end to control the signal transmitting unit and the signal receiving unit of this channel of this end to restore normal working state according to the algorithm of human eyes protection.

4. The method of claim 2, **characterized in that** said restoration process adopts a master-slave mode, first choosing any pair of interconnected channels from each channel of the terminal nodes to be master channels and the other channels to be slave channels, including the following steps of
e2) the signal transmitting units corresponding to the master channels between the two terminal nodes sending re-start request message to the opposite end through the line optic fiber with a predetermined time interval;
f2) after the signal receiving unit of the master channel of the opposite end receiving the request message, sending restoration information to the control unit of this channel of this end;
g2) the control unit verifying whether the message is correct, if it is correct, controlling the signal transmitting unit of this channel of this end to send response message to the opposite end;
h2) if the signal receiving unit of the master channel of the opposite end receives the response message, notifying the corresponding control unit to control the transmitting and receiving units of the master channel of this end to restore normal working state;
i2) if the signal receiving unit of the master channel of the end having sent the response message detects that the receiving power is restored normal state, and the receiving power does not intermit during the period of verifying time delay, notifying the corresponding control unit to control the signal transmitting unit and the signal receiving unit of the master channel of this end to restore normal working state;
j2) the control units corresponding to the master channels of the two ends sending commands to the control unit of each slave channel of this end through inner module bus respectively to control the signal transmitting unit and the signal receiving unit of the corresponding channel to restore normal working state.

5. The method of claim 3 or 4, **characterized in that** said request message and said response message transmitted between the two corresponding terminal nodes are power level or custom-built pulse train.

6. The method of claim 5, **characterized in that** the generation of said response message is controlled by the re-start request message, outputting high level when optical power high level is received, and outputting low level when optical power low level is received.

7. The method of claim 3 or 4, **characterized in that** the operation of said signal transmitting unit, signal receiving unit and control unit is controlled by the aid of node layer protocol algorithm.

8. The method of claim 1, **characterized in that** said protection process and said restoration process can also be directed by the operator, whose commands are assigned to the corresponding terminal nodes through network management bus and network management unit for implementation.

9. The method of claim 1, **characterized in that** said optical communication system is coarse wavelength division multiplexing system.

10. The method of claim 1, **characterized in that** said optical communication system is dense wavelength division multiplexing system without optical power controller in multiplexing layer, or is SDH system.
